# EUROPÄISCHE PATENTSCHRIFT

(11) **EP 4 188 783 B1**
(45) Veröffentlichungstag und Bekanntmachung des Hinweises auf die Patenterteilung: **10.07.2024**
(21) Anmeldenummer: 21820133.3
(22) Anmeldetag: 22.11.2021
(51) Int. Cl.: B62J 17/083, B62K 7/04

(54) **HAUBE FÜR EINEN LASTENFAHRRADBEHÄLTER**
HOOD FOR A BOX OF A CARGO BIKE
CAPOT POUR UNE CAISSE D'UN VÉLO-CARGO

(30) Priorität: 25.11.2020 DE 202020106778 U
(43) Veröffentlichungstag der Anmeldung: 07.06.2023
(73) Patentinhaber: RTI Sports GmbH, 56070 Koblenz (DE)
(72) Erfinder: RASCHE, Johannes, 64285 Darmstadt (DE); ZARZA AGUADO, Alejandro, 64646 Heppenheim (DE)
(74) Vertreter: dompatent von Kreisler Selting Werner - Partnerschaft von Patent- und Rechtsanwälten mbB
(86) Internationale Anmeldenummer: PCT/EP2021/082538
(87) Internationale Veröffentlichungsnummer: WO 2022/112187

(56) Entgegenhaltungen:
- DE-U1- 202020 000 599
- DE-U1- 202020 000 599
- ANN-KATRIN GNUTZMANN: "Urban Arrow Family Raincover PLUS | neues Regenverdeck und Update 2020 Modell", 17 August 2020 (2020-08-17), XP055889280, Retrieved from the Internet <URL:https://www.youtube.com/watch?v=hoKFRbPm_kg> [retrieved on 20220208]
- ANN-KATRIN GNUTZMANN: "Urban Arrow Family Raincover PLUS | neues Regenverdeck und Update 2020 Modell", 17 August 2020 (2020-08-17), XP055889280, Retrieved from the Internet <URL:https://www.youtube.com/watch?v=hoKFRbPm_kg> [retrieved on 20220208]

## Beschreibung

Die Erfindung betrifft eine Haube für einen Lastenfahrradbehälter.

Lastenfahrräder weisen zur Aufnahme von Gegenständen oder Personen einen Lastenfahrradbehälter auf. Für den Transport von Personen, insbesondere Kindern, ist es bekannt, den Lastenfahrradbehälter mit einem Verdeck oder einer Haube zu versehen, insbesondere um die Kinder vor Regen oder auch Sonneneinstrahlung zu schützen. Bekannte Hauben sind aus folienartigem, flexiblem Material hergestellt und beispielsweise mit flexiblen Stangen, ähnlich eines Zelts mit dem Lastenfahrradbehälter verbunden. Derartige Hauben für Lastenfahrradbehälter weisen insbesondere den Nachteil auf, dass diese häufig schwierig zu handhaben, insbesondere aufzuspannen sind. Auch weisen derartige flexible Hauben den Nachteil auf, dass ein tatsächlich vollständiges Abdichten nicht erfolgt und insbesondere bei stärkerem Regen häufig Wasser in den Lastenfahrradbehälter gelangt.

Eine weitere Problematik bei Hauben für Lastenfahrradbehälter besteht darin, dass diese schlecht gespannt werden können. Insbesondere bei transparenten Folien ist eine entsprechende Faltenbildung nachteilig, da diese die Sicht von in dem Lastenfahrradbehälter transportierten Kindern beeinträchtigt. Im Übrigen sind Hauben, die als Regenhauben für Transportbehälter für Kinder dienen, häufig an der Rückseite offen. Dies hat den Nachteil, dass Feuchtigkeit eindringen kann. Vollständig geschlossene Schutzhüllen sind nur bei Lastenfahrradbehältern bekannt, die für den Transport von Gütern ausgestattet sind. Die entsprechenden Abdeckungen sind nicht entsprechend einer Haube ausgebildet, sondern schließen die Öffnung des Lastenfahrradbehälters im Wesentlichen eben.

Bekannte Hauben müssen ferner relativ niedrig ausgebildet sein, wenn der Lastenfahrradbehälter vor dem Lenker angeordnet ist, damit die Bewegungsfreiheit des Lenkers durch die Haube nicht beeinträchtigt wird.

Ferner ist aus DE202020000599U eine gattungsgemäße Windschutzscheibe für ein Lastenfahrrad bekannt. Diese kann aus einer zusammengefalteten, geschlossenen Position in eine offene Position überführt werden, wobei die einzelnen Bauteile beispielsweise über Gelenke miteinander verbunden sind.

Aufgabe der Erfindung ist es, eine Haube für einen Lastenfahrradbehälter zu schaffen, die einfach und zuverlässig zu handhaben ist.

Die Lösung der Aufgabe erfolgt erfindungsgemäß durch die Merkmale des Anspruchs 1.

Die erfindungsgemäße Haube für einen Lastenfahrradbehälter weist ein Rahmenelement auf. Das Rahmenelement weist zumindest ein Vorderelement und ein Dachelement auf. Im montierten Zustand, d.h. wenn die Haube auf dem Lastenfahrradbehälter montiert ist, weist das Vorderelement in Fahrtrichtung und erstrecht sich vorzugsweise über die gesamte Breite des Lastenfahrradbehälters. Das Dachelement ist oberhalb des Lastenfahrradbehälter im montierten Zustand angeordnet und überdacht in einem Abstand zur Oberkante des Lastenfahrradbehälter die gesamte Fläche des Lastenfahrradbehälters und weist somit mindestens die Breite und die Länge der Öffnung des Lastenfahrradbehälters auf. Selbstverständlich kann das Vorderelement auch entgegen der Fahrtrichtung geneigt sein, so dass das Dach eine entsprechend kürzere Länge aufweisen kann. Relevant ist, dass das Dachelement in bevorzugter Ausführungsform, insbesondere zusammen mit dem Vorderelement die Öffnung des Lastenfahrradbehälters in einem Abstand zur Oberkante des Lastenfahrradbehälter überdeckt. Erfindungsgemäß ist das Rahmenelement als steife, insbesondere selbsttragende Struktur ausgebildet. Die Haube ist somit, ähnlich eines Hardtops bzw. steifen Verdecks ausgebildet. Es ist daher auf einfache Weise möglich, die Haube, insbesondere als ein vormontiertes Bauteil unmittelbar mit dem Lastenfahrradbehälter zu verbinden. Ein gesondertes Aufspannen einer Folie oder Plane oder dergleichen ist nicht erforderlich. Ein weiterer Vorteil einer derartigen steifen selbsttragenden Struktur besteht darin, dass beispielsweise textile Elemente, Folien oder dergleichen mit einer Vorspannung montiert werden können, so dass keine Faltenbildung entsteht. Dies hat insbesondere bei transparenten Folien oder dergleichen den Vorteil, dass für Kinder ein freier Blick gewährleistet ist. Auch fühlen sich Kinder insofern weniger eingeengt.

In bevorzugter Ausführungsform weist das Rahmenelement zwei Seitenträger auf. Diese verlaufen insbesondere parallel zueinander. Bevorzugt ist es hierbei, dass die Seitenträger sowohl seitliche Träger des Vorderelements als auch des Dachelements ausbilden. Insbesondere sind die Seitenträger einstückig ausgebildet, so dass das Vorderelement und das Dachelement ein Bauteil ausbilden. Insofern ist es bevorzugt, dass die Seitenträger das Vorderelement und/oder das Dachelement seitlich begrenzen.

Bevorzugt ist ferner zur weiteren Versteifung des selbsttragenden Rahmenelements, dass das Rahmenelement einen Vorderträger aufweist. Der Vorderträger ist vorzugsweise derart angeordnet, dass er die beiden Seitenträger miteinander verbindet. Insbesondere verläuft der Vorderträger in montiertem Zustand der Haube im Wesentlichen horizontal und/oder parallel zu einer Oberkante einer Vorderwand des Lastenfahrradbehälters. Bevorzugt ist es ferner, dass der Vorderträger fest mit den beiden Seitenträgern verbunden oder einstückig mit diesen ausgebildet ist. Unabhängig von den unterschiedlichen Ausführungsformen der Erfindung ist es bevorzugt, dass die einzelnen Träger fest miteinander verbunden sind. Beispielsweise kann eine feste Montage über Schrauben, ein Verschweißen oder dergleichen erfolgen. Hierdurch entsteht aufgrund der steifen Strukturen der Träger ein selbsttragendes Rahmenelement.

In einer weiteren bevorzugten Ausführungsform weist das Rahmenelement einen Dachträger auf. Der Dachträger ist vorzugsweise derart ausgebildet und angeordnet, dass er die beiden Seitenträger miteinander verbindet. Hierdurch erfolgt wiederum eine Querversteifung des Rahmenelements. Der Dachträger ist vorzugsweise fest mit den beiden Seitenträgern verbunden oder einstückig mit diesen ausgebildet. Vorzugsweise bildet der Dachträger ein in Fahrtrichtung hinteres Rahmenteil des Dachelements.

In besonders bevorzugter Ausführungsform ist der Vorderträger und/oder der Dachträger derart angeordnet, dass er jeweils mit den Enden der beiden Seitenträger verbunden bzw. einstückig ausgebildet ist. Die beiden Seitenträger, der Vorderträger und der Dachträger bilden somit ein umlaufendes Rahmenelement, insbesondere ein oberes Rahmenteil. Hierbei ist es bevorzugt, dass die Seitenträger in Seitenansicht gebogen ausgebildet sind, so dass das Dachelement in einem Abstand zum Lastenfahrradbehälter angeordnet ist.

In einer weiteren bevorzugten Ausführungsform sind die beiden Seitenträger insbesondere zusätzlich über einen Querträger miteinander verbunden. Der Querträger ist hierbei bezogen auf die Länge der Seitenträger in einem mittleren Bereich der Seitenträger angeordnet und stellt insbesondere eine Grenze zwischen dem Vorderelement und dem Dachelement dar. Vorzugsweise ist der Querträger fest mit den Seitenträgern verbunden und einstückig mit diesen ausgebildet.

In bevorzugter Weiterbildung der Erfindung sind der Vorderträger und/oder der Dachträger und/oder der Querträger im Wesentlichen parallel zueinander angeordnet.

Die Träger des Rahmenelements können unterschiedliche Querschnittsabmessungen aufweisen, wobei es bevorzugt ist, dass die Träger eine Höhe bzw. eine Breite aufweisen, die im Bereich von 1 cm bis 5 cm, vorzugsweise im Bereich von 1 cm bis 2 cm liegt. Die Querschnittskontur der Träger kann sich hierbei auch voneinander unterscheiden und ist insbesondere abgerundet ausgebildet. Ferner können in den Trägern beispielsweise Rillen oder Schienen zur Aufnahme von Fensterelementen, Rollläden oder dergleichen vorgesehen sein.

Erfindungsgemäß ist das Rahmenelement mit einem Scharnier verbunden. Mit Hilfe des Scharniers ist es möglich, das Rahmenelement mit dem Lastenfahrradbehälter zu verbinden, wobei ein Scharnierelement des Scharniers zum schwenkbaren Verbinden der Haube mit dem das Lastenfahrradbehälter verbunden werden kann. Die Verbindung des Scharnierelements mit dem Lastenfahrradbehälter oder beispielsweise einem Rahmenelement des Fahrrads, das den Lastenfahrradbehälter trägt oder fixiert, kann beispielsweise über Schrauben, Rastverbindungen oder andere Halterungen erfolgen. Besonders bevorzugt ist es, dass das Scharnierelement mit dem Vorderelement des Rahmenelements und insbesondere mit dem Vorderträger des Rahmenelements verbunden ist. Das Scharnier bildet somit eine gelenkige Verbindung zwischen der Haube und dem Lastenfahrradbehälter, insbesondere zwischen dem Vorderträger des Rahmenelements und einer Vorderwand des Lastenfahrradbehälters. Eine Scharnierachse kann hierbei insbesondere horizontal verlaufen.

In besonders bevorzugter Ausführungsform ist das Scharnierelement über eine Ein-Punkt-Verbindung mit dem Lastenfahrradbehälter mittelbar oder unmittelbar verbunden. Insbesondere weist die Ein-Punkt-Verbindung eine Rastverbindung auf, die über einen Druckknopf oder ein derartiges Element lösbar ist.

Durch einfaches Betätigen bzw. Drücken des Druckknopfes kann das Scharnierelement somit vom Lastenfahrradbehälter gelöst werden. Somit kann auf einfache Weise die gesamte Haube vom Lastenfahrradbehälter gelöst werden, indem beispielsweise das Scharnierelement oder zusätzlich weitere Halteelemente bzw. Halteeinrichtungen wie Verspannelemente, Gurte, Schlaufen oder dergleichen zum Fixieren der Haube gelöst werden. In bevorzugter Ausführungsform ist erfindungsgemäß zum Lösen und Befestigen der Haube kein Werkzeug erforderlich.

In besonders bevorzugter Weiterbildung weist das Scharnierelement ein Federelement auf. Bei diesem kann es sich um eine Drehfeder, ein als Feder dienendes elastisches Element oder dergleichen handeln. Vorzugsweise ist bei geschlossener Haube das Federelement vorgespannt. Dies hat den Vorteil, dass sich beim Öffnen der Haube, beispielsweise beim Lösen von Halteelementen oder dergleichen, die Haube automatisch, zumindest um einen vorgegebenen Winkel, der beispielsweise durch einen Anschlag begrenzt ist, öffnet.

Erfindungsgemäß ist das Rahmenelement, insbesondere das Dachelement des Rahmenelements mit einem Halteelement zum Halten der Haube in einer geschlossenen Position verbunden. Hierbei kann das Halteelement beispielsweise als Haltegurt, Halteband oder dergleichen ausgebildet sein. Vorzugsweise ist das Halteelement mittelbar oder unmittelbar lösbar mit dem Lastenfahrradbehälter verbunden. Eine bevorzugt lösbare Verbindung kann durch eine Magnethalterung realisiert werden. Dies hat den Vorteil, dass das Halteelement auf einfache Weise gelöst und die Haube entfernt bzw. geöffnet werden kann. Bei einer mit einem Scharnier versehenen Haube ist das Öffnen besonders einfach, da nach dem Lösen der Halteelemente, insbesondere der Haltegurte ein Aufklappen der Haube möglich ist. Hierbei ist das Aufklappen der Haube insbesondere nach vorne bevorzugt. Je nach Anordnung des Scharniers kann jedoch auch ein seitliches Aufklappen erfolgen.

Da das Scharnierelement erfindungsgemäß mit einem Federelement versehen ist, erfolgt somit durch ein Lösen der Halteelemente, insbesondere der Haltegurte, ein automatisches Öffnen der Haube. Hierbei schwenkt die Haube nach dem Öffnen der Halteelemente automatisch um die Schwenkachse aufgrund der Vorspannung des Federelements um einen vorgegebenen Öffnungswinkel. Dieser ist vorzugsweise durch einen Anschlag begrenzt. Hierdurch ist auf einfache Weise, beispielsweise ein Ein- und Aussteigen in den Lastenfahrradbehälter oder das Beladen des Lastenfahrradbehälters möglich, da die Haube nicht in eine Offenstellung gebracht werden muss, sondern automatisch in die Offenstellung verschwenkt.

In einer bevorzugten Weiterbildung der erfindungsgemäßen Haube weist das Rahmenelement Seitenelemente auf. Diese dienen insbesondere in Verbindung mit dem Vorderelement und einem Dachelement zu einem seitlichen Verschließen der Haube. Insofern erstrecken sich die Seitenelemente vorzugsweise, ausgehend von dem Vorderelement und dem Dachelement nach unten in Richtung der Seitenwände des Lastenfahrradbehälters. Insbesondere liegen die Seitenelemente in geschlossener Position der Haube derart an den Seitenwänden des Lastenfahrradbehälters an, dass in diesem Bereich ein dichtes Abschließen erfolgt.

Vorzugsweise sind die Seitenelemente lösbar mit dem Vorderelement und dem Dachelement verbunden. So kann beispielsweise je nach Witterung eine vollständig geschlossene oder eine seitlich offene Haube genutzt werden. Vorzugsweise weisen die Seitenelemente, insbesondere einen umlaufenden Träger auf, so dass es sich um Rahmen handelt. Die von dem Rahmen aufgespannte Fläche kann mit einem, beispielsweise transparenten Material und/oder einem Rollo oder dergleichen verschlossen sein.

In einer bevorzugten Weiterbildung weist das Rahmenelement ein dem Vorderelement gegenüberliegendes Rückelement auf. Das Rückelement bildet somit eine Rückwand und ist vorzugsweise lösbar mit dem Dachelement verbunden. Sofern Seitenelemente vorgesehen sind, ist es bevorzugt, dass das Rückelement auch mit den Seitenelementen lösbar verbunden ist. Insbesondere erfolgen derartige Verbindungen stets derart, dass es sich um, im Wesentlichen wasserdichte Verbindungen handelt. Vorzugsweise schließt das Rückelement insofern auch mit einer Oberkante des Lastenfahrradbehälters oder einem Zwischenelement ab. Besonders bevorzugt ist es, dass das Rückelement aus einem festen, insbesondere steifen Kunststoffmaterial, wie einem EPP oder dergleichen, hergestellt ist. Insbesondere weist das Rückelement im Wesentlichen ein Material auf, aus dem auch der Lastenfahrradbehälter hergestellt ist. Hierdurch bildet das Rückelement eine weiteres Schutzelement aus. Des Weiteren kann hierdurch die Steifigkeit der Haube weiter verbessert werden.

Bei einer erfindungsgemäßen Haube, die neben dem Vorderelement und dem Dachelement zwei Seitenelemente und ein Rückelement aufweist, handelt es sich somit um eine vollständig geschlossene Haube, deren Abmessungen in bevorzugter Ausführungsform im unteren Bereich den Abmessungen der Öffnung des Lastenfahrradbehälters entsprechen. Wichtig ist hierbei, dass eine umlaufende, insbesondere dichte Verbindung zwischen der Haube und der Oberseite des Lastenfahrradbehälters realisiert werden kann.

Das Rückelement ist in bevorzugter Weiterbildung derart ausgebildet, dass es einen Vorderteil und einen Unterteil aufweist. Der Vorderteil ist das Teil des Rückelements, das mit dem Dachelement, vorzugsweise lösbar verbunden ist.

Das Unterteil schließt sich an das Vorderteil an und ist insbesondere fest mit dem Vorderteil verbunden, insbesondere einstückig mit diesem ausgebildet. Das Unterteil ist in bevorzugter Weiterbildung hierbei derart ausgebildet, dass es in montiertem Zustand der Haube unterhalb eines Fahrradlenkers angeordnet ist. Das Vorderteil ist vorzugsweise in montiertem Zustand derart angeordnet, dass es in Fahrtrichtung vor dem Fahrradlenker angeordnet ist. Dies hat insbesondere den Vorteil, dass die Haube bzw. das Unterteil des Rückelements der Haube bezogen auf die Fahrtrichtung des Lastenrades sehr weit nach hinten gezogen werden kann. Das Unterteil weist vorzugsweise einen Rückträger auf, der an einer Oberseite der Rückwand des Lastenfahrradbehälters oder an einer Oberseite eines Kragenelements anliegt.

In einer besonders bevorzugten Ausführungsform weist die Haube somit ein Rahmenelement auf, das einen oberen Rahmenteil umfasst. Das obere Rahmenteil weist zwei Seitenträger, einen Vorderträger und einen Dachträger sowie gegebenenfalls einen Querträger auf. Unabhängig von dem Querträger ist hierdurch in bevorzugter Ausführungsform ein geschlossenes Rahmenteil gebildet. In einer bevorzugten Weiterbildung der Erfindung weist das Rahmenelement ferner einen unteren Rahmenteil auf. Dieser ist durch den Vorderträger, zwei Seitenträger und einem Rückträger ausgebildet, die wiederum miteinander verbundenen, insbesondere einstückig ausgebildet sind. Das untere Rahmenteil bildet somit in bevorzugter Ausführungsform ebenfalls eine in sich geschlossene Rahmenförmige Struktur. Das obere Rahmenteil und das untere Rahmenteil sind, sofern beide Rahmenteile in einer Ausführungsform vorgesehen sind, miteinander verbunden und weisen gemeinsam den Vorderträger auf. Der Vorderträger, die beiden Seitenträger und der Rückträger sind vorzugsweise derart angeordnet bzw. ausgebildet, dass diese in montiertem Zustand der Haube an einem oberen Rand des Lastenfahrradbehälters angeordnet, bzw. mit diesem verbunden sind. Sofern ein Kragenelement vorgesehen ist, ist dieses im entsprechenden Bereich zwischen den Trägern und dem oberen Rand des Lastenfahrradbehälters angeordnet.

Das Dachelement der Haube kann derart ausgebildet sein, dass es zumindest teilweise über das Unterteil ragt, so dass der Lenker vorzugsweise zwischen dem Dachelelement und dem Unterteil angeordnet ist. Hierdurch ist ein guter Regenschutz oder Spritzwasserschutz für die Hände des Fahrradfahrers realisiert.

In einer weiteren bevorzugten Ausführungsform ist mit dem Lastenfahrradbehälter ein Kragenelement verbunden. Das Kragenelement kann auf einen oberen Rand des Lastenradbehälters aufgesetzt bzw. fest mit diesem verbunden werden. In montiertem Zustand ist das Kragenelement vorzugsweise derart angeordnet, dass es in einem rückwärtigen, entgegen der Fahrtrichtung weisenden Bereich des Lastenfahrradbehälters angeordnet ist. Insbesondere erfolgt durch das Kragenelement ein Verlängern der Rückwand bzw. ein Erhöhen der Rückwand des Lastenfahrradbehälters. Bevorzugt ist ferner, dass das Kragenelement zusätzlich zu einem mit der Rückwand des Lastenfahrradbehälters verbindbaren Wandelement, Seitenelemente aufweist. Diese sind einerseits vorzugsweise mit dem Wandelement verbunden, insbesondere einstückig ausgebildet und ragen vorzugsweise in Fahrtrichtung nach vorne in Richtung der Seitenwände des Lastenfahrradbehälters. Insbesondere in Draufsicht ist das Kragenelement somit U-förmig ausgebildet. Die Ausgestaltung des Kragenelements erfolgt vorzugsweise derart, dass durch das Wandelement eine im Lastenfahrradbehälter sitzende Person geschützt ist, insbesondere ist hierdurch der Kopf der Person, insbesondere des Kindes geschützt. Die Seitenelemente sind derart ausgebildet, dass sie den Kopf seitlich schützen, so dass insbesondere bei Zusammenstößen durch das Kragenelement ein guter Schutz des Kopfes eines Kindes realisiert werden kann.

Das Kragenelement ist vorzugsweise lösbar mit dem Lastenfahrradbehälter verbunden, so dass der Lastenfahrradbehälter für unterschiedliche Einsatzformen, beispielsweise zum Transport von Lasten oder zum Transport von Kindern auf einfache Weise umgebaut werden kann. Die Verbindung kann wiederum über Schraubelemente, Rastelemente, Klemmelemente oder dergleichen erfolgen.

Sofern der Lastenfahrradbehälter mit einem Kragenelement verbunden ist, ist es bevorzugt, dass die Haube entsprechend derart ausgebildet ist, dass das Rückelement und/oder die Seitenelemente des Rahmenelements an einem oberen Rand des Kragenelements anliegen und insbesondere lösbar mit diesem verbunden sind.

Beim Vorsehen eines Kragenelements können die Haltelemente, insbesondere die Haltegurte, mit denen die Haube in einer geschlossenen Position gehalten wird, auch mit dem Kragenelement verbunden sein.

Das Kragenelement stellt eine selbständige Erfindung dar, die unabhängig von der Haube ist. Durch ein derartiges Kragenelement sind beispielsweise in dem Lastenfahrradbehälter angeordnete Personen besser geschützt.

Die einzelnen Träger des Rahmenelements sind in bevorzugter Ausführungsform zumindest teilweise aus Aluminium, Kunststoff, Karbon, etc. oder Kombinationen dieser Materialien hergestellt. Beispielsweise können einzelne Profilelemente mit entsprechenden Eckelementen bzw. Verbindungselementen miteinander verbunden werden. Hierbei kann ein Verschrauben, Verkleben oder Verschweißen oder dergleichen erfolgen. Insbesondere die Verbindungselemente können als Spritzgussteile hergestellt sein. Die insbesondere profilierten Träger können als Faserverbundwerkstoffe hergestellt sein und somit eine hohe Biegesteifigkeit aufweisen. Zwischen den Trägern können Folien, Textilien und dergleichen gespannt sein. Aufgrund des Vorspannes dieser Materialien kann eine Faltenbildung vermieden werden. Insbesondere sind die Träger mit denselben Materialien überspannt.

Nachfolgend wird die Erfindung anhand einer bevorzugten Ausführungsform unter Bezugnahme auf die anliegenden Zeichnungen näher erläutert.

Es zeigen:
- Figur 1: eine schematische perspektivische Ansicht eines Lastenfahrrads mit einem Lastenaufnahmebehälter, an dem ein Kragenelement vorgesehen ist, in perspektivischer Ansicht,
- Figuren 2 bis 5: schematische perspektivische Ansichten eines Lastenfahrrads mit einem Lastenaufnahmebehälter, an dem ein Kragenelement und eine Haube angeordnet sind, in unterschiedlichen perspektivischen Ansichten und Ausgestaltungen,
- Figur 6: eine schematische perspektivische Ansicht der Haube von vorne,
- Figur 7: eine schematische perspektivische Ansicht der Haube von hinten, und
- Figur 8: eine schematische perspektivische Teilansicht der Haube und des Lastenfahrradbehälters im Bereich des Scharniers.

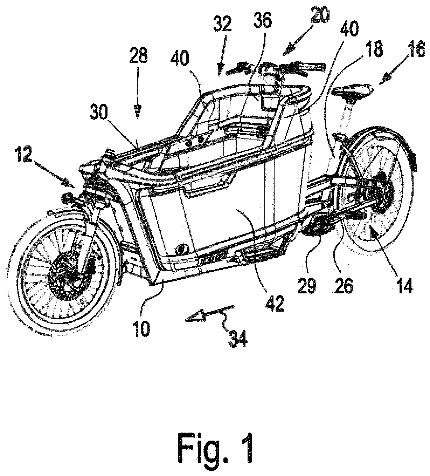

Bei dem in Figur 1 dargestellten Lastenfahrrad, handelt es sich um ein einspuriges Lastenfahrrad, bei dem ein Fahrradrahmen 10 mit einer Gabel 12 sowie einem Hinterbau 14 verbunden ist. Nahe des Hinterbaus 14 weist der Fahrradrahmen einen Sattel 16 tragende Sattelstütze 18 auf. In dem Bereich zwischen dem Hinterbau und einer einen Lenker 20 tragenden Lenksäule 22 ist ein Elektromotor 24 sowie eine Tretkurbel 26 aufweisender Antriebsbereich angeordnet. Die Lenkung der Vorderradgabel 12 erfolgt über einen Seilzug.

Der Fahrradrahmen 10 trägt einen Lastenfahrradbehälter 28, der bei dem dargestellten Lastenfahrrad zwischen der Lenksäule 22 und einem Rahmenelement, das die Gabel 12 trägt angeordnet ist.

Der Lastenfahrradbehälter 28 ist insbesondere zweiteilig aufgebaut und aus einem Kunststoffmaterial wie EPP hergestellt. Vorzugsweise ist der Lastenfahrradbehälter 28, wie in EP 20190927 beschrieben, ausgestaltet.

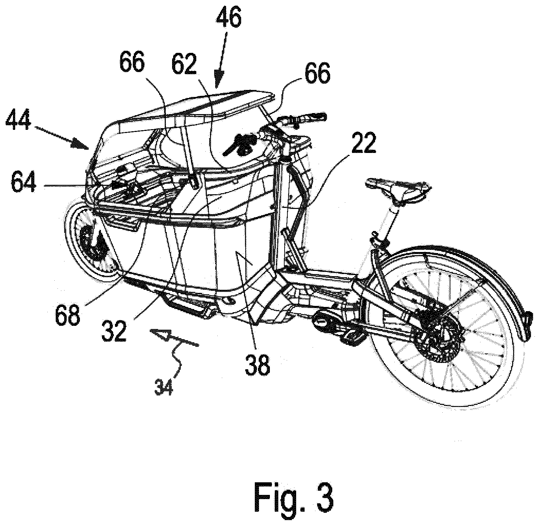

Auf einem oberen Rand 30 des Lastenfahrradbehälters 28 ist ein Kragenelement 32 angeordnet. Das Kragenelement 32 ist bezogen auf eine Fahrtrichtung 34 in einem rückwärtigen Bereich des Lastenfahrradbehälters 28 angeordnet. Das Kragenelement 32 weist eine Rückwand 36 auf, die in montiertem Zustand oberhalb einer Rückwand 38 (Figur 3) des Lastenfahrradbehälters 28 angeordnet ist und diese nach oben verlängert. Ferner weist das Kragenelement 32 zwei Seitenelemente 40 auf, die insbesondere einstückig mit der Rückwand 36 verbunden sind. Die beiden Seitenelemente 40 sind jeweils oberhalb der Seitenwände 42 des Lastenfahrradbehälters 28 angeordnet und verlängern diese nach oben. Das in Draufsicht U-förmige Kragenelement 32 dient somit als Schutz für ein innerhalb des Lastenfahrradbehälters 28 sitzendes Kind. Insbesondere schützt das Kragenelement 32 den Kopf des Kindes.

Der Lenker 20 ist bei der dargestellten bevorzugten Ausführungsform des Lastenfahrrads oberhalb des Kragenelements 32 angeordnet.

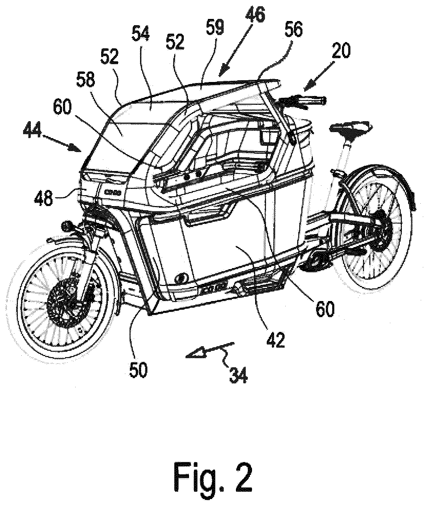

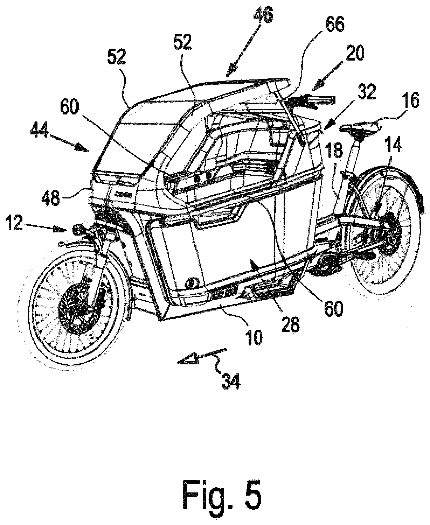

Die Figuren 2 bis 5 zeigen in unterschiedlichen Ausgestaltungen das in Figur 1 dargestellte Lastenfahrrad, wobei zusätzlich zu dem Kragenelement 32 eine Haube vorgesehen ist. Die Haube ist im Wesentlichen auf den oberen Rand 30 des Lastenfahrradbehälters 28 angeordnet. In dem bevorzugten dargestellten Ausführungsbeispiel weist die Haube ein Rahmenelement auf, das zunächst ein Vorderelement 44 sowie ein Dachelement 46 umfasst. Das Vorderelement 44 weist einen aus steifem Material ausgebildeten Vorderträger 48 auf, der auf einem oberen Rand einer Vorderwand 50 des Lastenfahrradbehälters 28 aufliegt bzw. mit diesem fest verbunden ist.

Der Vorderträger 48 ist mit zwei Seitenträgern 52 fest verbunden bzw. ausgebildet. Die beiden Seitenträger 52 verlaufen zunächst, ausgehend vom Vorderträger 48 schräg nach oben und schräg nach hinten bezogen auf eine Fahrtrichtung 34 in einem Winkel von ca. 30° bis 60° gegenüber einer Horizontalen. Sodann verlaufen die Seitenträger etwas flacher an der Horizontalen an einer weiteren leichten Steigung entgegen der Fahrtrichtung nach hinten, in Richtung des Lenkers 20. Zwischen diesen beiden Bereichen der Seitenträger ist ein die beiden Seitenträger miteinander verbindender Querträger 54 angeordnet, der im Wesentlichen parallel zu dem Vorderträger 48 verläuft. Auf der, in Richtung des Lenkers 20, weisenden Rückseite ist ein Dachträger 56 angeordnet, der wiederum im Wesentlichen parallel zum Querträger 54 sowie zum Vorderträger 48 verläuft. Die Träger 48, 52, 54, 56 sind vorzugsweise fest miteinander verbunden und/oder einstückig ausgebildet und bilden ein oberes Rahmenteil aus. Hierbei handelt es sich um ein selbst tragendes steifes Rahmenteil. Im Bereich des Vorderelements 44 sowie des Dachelements 46 können als Fenster dienende Folienelemente 58, 59, Rollos oder dergleichen vorgesehen sein.

Im dargestellten Ausführungsbeispiel ist der Vorderträger 48 ferner mit zwei Seitenträgern 60 verbunden bzw. einstückig ausgebildet. Die beiden Seitenträger 60 liegen am oberen Rand der Seitenwände 42 des Lastenfahrradbehälters 28 an und sind gegebenenfalls mit diesem verbunden.

Die beiden Seitenträger 60 gehen in einen Rückträger 62 (Figur 3) über und sind mit diesem in bevorzugter Ausführung wiederum einstückig ausgebildet. Der Vorderträger 48, die beiden Seitenträger 60 sowie der Rückträger 62 bilden ein unteres Rahmenteil aus, das insbesondere einstückig oder fest verbunden mit dem oberen Rahmenteil ausgebildet ist. Insbesondere kann es sich bei dem oberen Rahmenteil und dem unteren Rahmenteil auch um gesonderte Bauteile handeln, die beispielsweise über Gelenke oder Scharniere miteinander verbunden sind, so dass das obere Rahmenteil um ein Scharnier 64 (Figur 3) geklappt werden kann.

Um das obere Rahmenteil bzw. je nach Ausgestaltungsform die entsprechende gesamte Haube in einer geschlossenen Position zu halten, ist das Dachelement 46 und somit das gesamte obere Rahmenteil über Haltegurte 66 (Figur 3) mit dem Kragenelement 32 verbunden. Die Haltegurte 66 sind mit dem Kragenelement 32 über Fixierelemente 68, wie beispielsweise Magnete oder dergleichen auf einfache Weise lösbar fixiert. Nach dem Lösen der Halteelemente 68 kann das obere Rahmenteil, d.h. das Vorderelement 44 zusammen mit dem Dachelement 46 in Figur 3 um das Scharnier 64 nach vorne in Richtung der Fahrtrichtung 34 aufgeklappt werden.

Vorzugsweise ist zwischen dem Kragenelement 32 und dem Dachelement 46 ein Rückelement 70 vorgesehen. Das Rückelement 70 weist Vorderteil 72 auf, das an der Unterseite des Dachelements 46 mit diesem verbunden ist und gegebenenfalls ebenfalls ein Fensterelement oder dergleichen aufweist. Ferner weist das Rückelement 70 Rückträger ein Unterteil 74 auf, das insbesondere einstückig mit dem Vorderteil 72 verbunden ist. Das Unterteil 74 ist mit dem oberen Rand des Kragenelements 32 verbunden und weist den Rückträger 62 auf. Der Lenker 20 ist oberhalb des Unterteils 74 angeordnet.

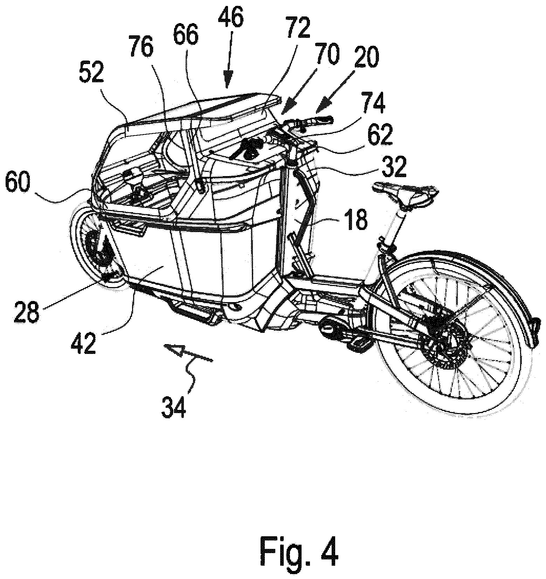

Im dargestellten Ausführungsbeispiel überdeckt ein Teil des Dachelements 46 das Unterteil 74 (Figur 4).

Zusätzlich kann die Haube nicht dargestellte Seitenelemente aufweisen, die die Haube seitlich verschließen. Die Seitenelemente sind im dargestellten Ausführungsbeispiel jeweils durch die Seitenträger 60 und die Seitenträger 52 begrenzt. Ferner erfolgt eine Begrenzung durch einen Rand bzw. ein Trägerelement 76 (Figur 4) des Rückelements 70.

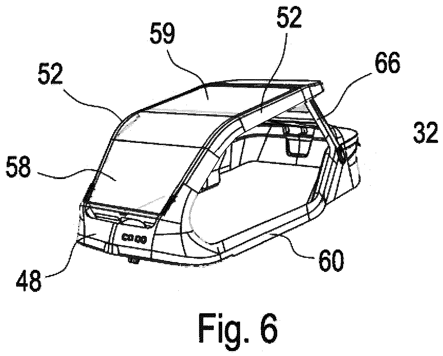

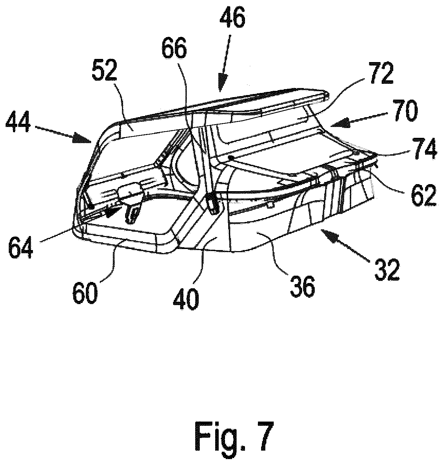

Aus den Figuren 6 und 7 ist insbesondere ersichtlich, dass es sich hier bei der erfindungsgemäßen Haube um ein selbstragendes Element handelt. Dies ist insbesondere auch ohne das Kragenelement 32 selbsttragend ausgestaltet.

Erfindungsgemäß sind die unterschiedlichen Träger derart ausgestaltet, miteinander verbunden und/oder einstückig ausgebildet, dass es sich um ein selbsttragendes Element handelt. Dieses ist sodann vorzugsweise mit einem textilen Material, Folien oder dergleichen überspannt. Beispielsweise können die Seitenträger 60 auch entfallen, so dass in diesem Bereich ein unterer Rand eines ein Seitenfenster ausbildendes Textil oder dergleichen angeordnet ist.

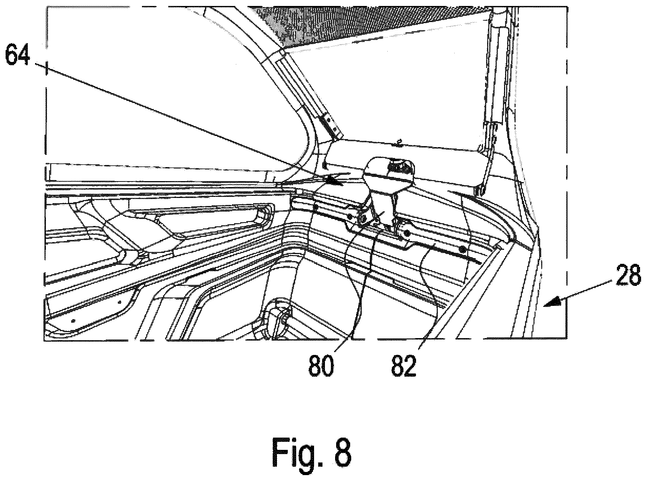

Das Scharnier 64 (Figur 8) weist ein Scharnierelement 80 auf, das im dargestellten Ausführungsbeispiel mit einem rahmenförmigen Trägerelement 82 des Fahrradaufnahmebehälters 28 verbunden ist. Mit Hilfe des Scharniers 64 kann insbesondere der obere Rahmenteil des Rahmenelements um eine horizontale Achse nach Lösen der Haltegurte 66 auf einfache Weise geöffnet werden. Gegebenenfalls kann im Bereich des Scharniers 64 ein Federelement vorgesehen sein, so dass ein selbsttägiges Öffnen nach Lösen der Gurte 66 erfolgt.

## Patentansprüche

1. Haube für einen Lastenfahrradbehälter, mit
einem Rahmenelement, das zumindest ein Vorderelement (44) und ein Dachelement (46) aufweist, wobei das Rahmenelement als steife, insbesondere selbsttragende Struktur ausgebildet ist, und
einem Scharnier (64), das mit dem Rahmenelement verbunden ist und ein Scharnierelement (80) zum schwenkbaren Verbinden des Rahmenelements mit dem Lastenfahrradbehälter (28) aufweist,
**dadurch gekennzeichnet, dass**
mit dem Rahmenelement, insbesondere dem Dachelement (46) ein als Haltegurt ausgebildetes Halteelement (66) zum Halten der Haube in einer geschlossenen Position verbunden ist und
das Scharnierelement ein Federelement aufweist, das bei geschlossener Haube vorgespannt ist.

2. Haube nach Anspruch 1, **dadurch gekennzeichnet, dass** das Rahmenelement zwei, insbesondere parallel zueinander angeordnete Seitenträger (52) aufweist, die vorzugsweise aus einem steifen Material hergestellt sind, und wobei vorzugsweise die Seitenträger (52) das Vorderelement (44) und/oder das Dachelement (46) seitlich begrenzen.

3. Haube nach Anspruch 1 oder 2, **dadurch gekennzeichnet, dass** das Rahmenelement einen im montierten Zustand, insbesondere horizontal verlaufenden Vorderträger (48) aufweist, der vorzugsweise mit den beiden Seitenträgern (52) verbunden ist.

4. Haube nach einem der Ansprüche 1 bis 3, **dadurch gekennzeichnet, dass** das Rahmenelement einen im montierten Zustand, insbesondere horizontal verlaufenden Dachträger (56) aufweist, der vorzugsweise mit den beiden Seitenträgern (52) verbunden ist und wobei vorzugsweise der Vorderträger (48) und/oder der Dachträger (56) jeweils mit den Enden der Seitenträger (52) verbunden sind.

5. Haube nach einem der Ansprüche 2 bis 4, **dadurch gekennzeichnet, dass** die Seitenträger (52) über einen Querträger (54) miteinander verbunden sind, der vorzugsweise zwischen dem Vorderelement (44) und dem Dachelement (46) angeordnet ist.

6. Haube nach einem der Ansprüche 1 bis 5, **dadurch gekennzeichnet, dass** das Halteelement (66) mittelbar oder unmittelbar lösbar mit dem Lastenfahrradbehälter (28) verbindbar ist.

7. Haube nach einem der Ansprüche 1 bis 6, **dadurch gekennzeichnet, dass** das Rahmenelement Seitenelemente, die vorzugsweise lösbar mit dem Vorderelement (44) und dem Dachelement (46) verbunden sind, aufweist.

8. Haube nach einem der Ansprüche 1 bis 7, **dadurch gekennzeichnet, dass** das Rahmenelement ein dem Vorderelement (44) gegenüberliegendes Rückelement (70) aufweist, das vorzugsweise mit dem Dachelement (46) verbunden ist.

9. Haube nach Anspruch 8, **dadurch gekennzeichnet, dass** das Rahmenelement ein mit dem Dachelement (46) verbundenes Vorderteil (72) und ein mit dem Vorderteil (72) verbundenes Unterteil (74) aufweist, wobei das Unterteil (74) in montiertem Zustand vorzugsweise unterhalb eines Fahrradlenkers (20) und/oder das Vorderteil (72) vor dem Fahrradlenker (20) angeordnet ist und wobei das Dachelement (46) vorzugsweise zumindest teilweise über das Unterteil (74) ragt.

10. Haube nach einem der Ansprüche 1 bis 9, **gekennzeichnet durch** ein Kragenelement (32), das am Lastenfahrradbehälter (28), insbesondere im montierten Zustand in einem rückwärtigen Bereich des Lastenfahrradbehälters (28) angeordnet ist.

11. Haube nach Anspruch 10, **dadurch gekennzeichnet, dass** das Kragenelement (32) ein mit einer Rückwand (38) des Lastenfahrradbehälters (28) verbindbares Wandelement (36) aufweist, wobei das Wandelement (36) vorzugsweise mit Seitenelementen (40) verbunden ist, die in die Seitenwände (42) des Lastenfahrradbehälters (28) ragen.

12. Haube nach Anspruch 10 oder 11, **dadurch gekennzeichnet, dass** das Kragenelement (32) lösbar mit dem Lastenfahrradbehälter (28) verbunden ist und/oder das Rahmenelement, insbesondere das Rückelement (70) und/oder die Seitenelemente des Rahmenelements lösbar mit dem Kragengelement (32) verbunden sind.

13. Haube nach einem der Ansprüche 1 bis 12, **dadurch gekennzeichnet, dass** das Halteelement, insbesondere die Haltegurte (66) lösbar mit dem Kragenelement (32) verbunden sind.

14. Haube nach einem der Ansprüche 1 bis 13, **dadurch gekennzeichnet, dass** das Rahmenelement ein selbstragendes oberes Rahmenteil und/oder ein selbsttragendes unteres Rahmenteil aufweist, wobei das obere Rahmenteil vorzugsweise die zwei Seitenträger (52), den Vorderträger (48) und den Dachträger (56) umfasst oder wobei vorzugsweise das untere Rahmenteil den Vorderträger (48), zwei Seitenträger (60) sowie den Rückträger (62) umfasst.

## Claims

1. A hood for a cargo bike box, comprising
a frame element comprising at least one front element (44) and a roof element (46), wherein the frame element is configured as a stiff, in particular self-supporting structure, and
a hinge (64) connected to the frame element and comprising a hinge element (80) for pivotably connecting the frame element to the cargo bike box (28),
**characterized in that**
a holding element (66) configured as a tether for holding the hood in a closed position is connected to the frame element, in particular the roof element (46), and
the hinge element comprises a spring element which is biased when the hood is closed.

2. The hood according to claim 1, **characterized in that** the frame element comprises two side beams (52), in particular arranged parallel to each other, which are preferably made of a stiff material, and wherein preferably the side beams (52) laterally delimit the front element (44) and/or the roof element (46).

3. The hood according to claim 1 or 2, **characterized in that** the frame element comprises a front beam (48) extending in the mounted state, in particular horizontally, which is preferably connected to the two side beams (52).

4. The hood according to any one of claims 1 to 3, **characterized in that** the frame element comprises a roof beam (56) extending in the mounted state, in particular horizontally, which is preferably connected to the two side beams (52), and wherein preferably the front beam (48) and/or the roof beam (56) are each connected to the endings of the side beams (52).

5. The hood according to any one of claims 2 to 4, **characterized in that** the side beams (52) are connected to each other via a cross beam (54) which is preferably arranged between the front element (44) and the roof element (46).

6. The hood according to any one of claims 1 to 5, **characterized in that** the holding element (66) is adapted to be indirectly or directly connected to the cargo bike box (28) in a detachable manner.

7. The hood according to any one of claims 1 to 6, **characterized in that** the frame element comprises side elements which are preferably connected to the front element (44) and the roof element (46) in a detachable manner.

8. The hood according to any one of claims 1 to 7, **characterized in that** the frame element comprises a back element (70) opposite the front element (44), which is preferably connected to the roof element (46).

9. The hood according to claim 8, **characterized in that** the frame element comprises a front part (72) connected to the roof element (46) and a bottom part (74) connected to the front part (72), wherein, in the mounted state, the bottom part (74) is preferably arranged below a bicycle handlebar (20) and/or the front part (72) is arranged in front of the bicycle handlebar (20), and wherein the roof element (46) preferably at least partially protrudes beyond the bottom part (74).

10. The hood according to any one of claims 1 to 9, **characterized by** a collar element (32) arranged with the cargo bike box (28), in particular in a mounted state in a rearward area of the cargo bike box (28).

11. The hood according to claim 10, **characterized in that** the collar element (32) comprises a wall element (36) adapted to be connected to a rear wall (38) of the cargo bike box (28), wherein the wall element (36) is preferably connected to side elements (40) protruding into the side walls (42) of the cargo bike box (28).

12. The hood according to claim 10 or 11, **characterized in that** the collar element (32) is detachably connected to the cargo bike box (28), and/or that the frame element, in particular the back element (70) and/or the side elements of the frame element are detachably connected to the collar element (32).

13. The hood according to any one of claims 1 to 12, **characterized in that** the holding element, in particular the tethers (66) are detachably connected to the collar element (32).

14. The hood according to any one of claims 1 to 13, **characterized in that** the frame element comprises a self-supporting upper frame part and/or a self-supporting lower frame part, wherein the upper frame part preferably comprises the two side beams (52), the front beam (48), and the roof beam (56), or wherein preferably the lower frame part comprises the front beam (48), two side beams (60), and the back beam (62).

## Revendications

1. Capot pour une caisse d'un vélo-cargo, avec
un élément de cadre, qui présente au moins un élément avant (44) et un élément de toit (46), l'élément de cadre étant constitué en tant que structure rigide, en particulier autoporteuse, et
une charnière (64), qui est raccordée à l'élément de cadre et présente un élément de charnière (80) destinée au raccordement pivotant de l'élément de cadre avec la caisse d'un vélo-cargo (28),
**caractérisé en ce**
**qu'**un élément de retenue (66), constitué en tant que sangle de retenue, destiné à retenir le capot dans une position fermée est raccordé à l'élément de cadre, en particulier à l'élément de toit (46) et
l'élément de charnière présente un élément de ressort qui est prétendu quand le capot est fermé.

2. Capot selon la revendication 1, **caractérisé en ce que** l'élément de cadre présente deux supports latéraux (52), en particulier disposés parallèlement entre eux, qui sont de préférence réalisés dans un matériau rigide, et, de préférence, les supports latéraux (52) délimitant latéralement l'élément avant (44) et/ou l'élément de toit (46) .

3. Capot selon la revendication 1 ou 2, **caractérisé en ce que** l'élément de cadre présente un support avant (48), en particulier placé horizontalement dans l'état monté, qui est de préférence raccordé aux deux supports latéraux (52).

4. Capot selon l'une des revendications 1 à 3, **caractérisé en ce que** l'élément de cadre présente un support de toit (56), en particulier placé horizontalement dans l'état monté, qui est de préférence raccordé aux deux supports latéraux (52), et de préférence le support avant (48) et/ou le support de toit (56) étant respectivement raccordés aux extrémités des supports latéraux (52).

5. Capot selon l'une des revendications 2 à 4, **caractérisé en ce que** les supports latéraux (52) sont raccordés l'un à l'autre par le biais d'un support transversal (54) qui est de préférence disposé entre l'élément avant (44) et l'élément de toit (46).

6. Capot selon l'une des revendications 1 à 5, **caractérisé en ce que** l'élément de retenue (66) peut être raccordé indirectement ou directement de façon amovible à la caisse d'un vélo-cargo (28).

7. Capot selon l'une des revendications 1 à 6, **caractérisé en ce que** l'élément de cadre comporte des éléments latéraux qui sont raccordés de préférence de façon amovible à l'élément avant (44) et à l'élément de toit (46) .

8. Capot selon l'une des revendications 1 à 7, **caractérisé en ce que** l'élément de cadre présente un élément arrière (70), opposé à l'élément avant (44), qui est de préférence raccordé à l'élément de toit (46).

9. Capot selon la revendication 8, **caractérisé en ce que** l'élément de cadre présente une partie avant (72) raccordée à l'élément de toit (46) et une partie inférieure (74) raccordée à la partie avant (72), la partie inférieure (74) étant, dans l'état monté, disposée de préférence au-dessous d'un guidon de vélo (20) et/ou la partie antérieure (72) étant disposée devant le guidon de vélo (20), et l'élément de toit (46) dépassant de préférence au moins partiellement de la partie inférieure (74).

10. Capot selon l'une des revendications 1 à 9, **caractérisé par** un élément de col (32) disposé sur la caisse d'un vélo-cargo (28), en particulier dans l'état monté, dans une zone arrière de la caisse d'un vélo-cargo (28).

11. Capot selon la revendication 10, **caractérisé en ce que** l'élément de col (32) présente un élément de paroi (36) pouvant être raccordé à une paroi arrière (38) de la caisse d'un vélo-cargo (28), l'élément de paroi (36) étant de préférence raccordé à des éléments latéraux (40) qui dépassent dans les parois latérales (42) de la caisse d'un vélo-cargo (28).

12. Capot selon la revendication 10 ou 11, **caractérisé en ce que** l'élément de col (32) est raccordé de façon amovible à la caisse d'un vélo-cargo (28) et/ou l'élément de cadre, en particulier l'élément arrière (70) et/ou les éléments latéraux de l'élément de cadre sont raccordés de façon amovible à l'élément de col (32).

13. Capot selon l'une des revendications 1 à 12, **caractérisé en ce que** l'élément de retenue, en particulier les sangles de retenue (66) sont raccordées de façon amovible à l'élément de col (32).

14. Capot selon l'une des revendications 1 à 13, **caractérisé en ce que** l'élément de cadre présente une partie de cadre supérieure autoporteuse et/ou une partie de cadre inférieure autoporteuse, la partie de cadre supérieure comprenant de préférence les deux supports latéraux (52), le support avant (48) et le support de toit (56), ou de préférence la partie de cadre inférieure comprenant le support avant (48), deux supports latéraux (60) ainsi que le support arrière (62).
